# EUROPEAN PATENT APPLICATION

(11) **EP 4 386 964 A1**
(43) Date of publication of application: **19.06.2024**
(21) Application number: 23205210.0
(22) Date of filing: 23.10.2023
(51) Int. Cl.: H01M 50/417, H01M 50/443, H01M 50/449, H01M 50/446, H01M 50/457, H01M 50/451, H01M 50/42, H01M 50/426, H01M 50/431, H01M 50/489, H01M 10/0525

(54) **SEPARATOR FOR RECHARGEABLE LITHIUM BATTERY AND RECHARGEABLE LITHIUM BATTERY INCLUDING THE SAME**

(30) Priority: 25.11.2022 KR 20220160637
(71) Applicant: Samsung SDI Co., Ltd., Yongin-si, Gyeonggi-do 17084 (KR)
(72) Inventor: CHOI, Yeonjoo, 17084 Yongin-si, Gyeonggi-do (KR); GU, Jayeon, 17084 Yongin-si, Gyeonggi-do (KR); KIM, Gain, 17084 Yongin-si, Gyeonggi-do (KR); PARK, Sanghyun, 17084 Yongin-si, Gyeonggi-do (KR)
(74) Representative: Gulde & Partner

(57) **Abstract**

Disclosed are a separator for a rechargeable lithium battery and a rechargeable lithium battery including the same. For example, in an embodiment, the separator for a rechargeable lithium battery includes a substrate and a heat resistant layer on at least one surface of the substrate; wherein the heat resistant layer includes shutdown filler under, inside, or on the heat resistant layer, or two or more thereof.

## Description

### BACKGROUND OF THE INVENTION

### (a) Field of the Invention

A separator for a rechargeable lithium battery and a rechargeable lithium battery including the same are disclosed.

### (b) Description of the Related Art

Recently, rechargeable batteries have drawn attentions as an energy source. Among them, a rechargeable lithium battery having high energy density and discharge voltage has already been commercially available and widely used, but efforts to improve their performance are continuously being made.

A separator, which is an element constituting the rechargeable lithium battery, enables charging and discharging the rechargeable lithium battery by continuously maintaining ionic conductivity, while separating positive and negative electrodes each other.

In order to realize a high-capacity rechargeable lithium battery, it is necessary to reduce the thickness of a separator, which is a component that does not contribute to battery capacity. In addition, in order to enhance the safety of high-capacity and high-output rechargeable lithium batteries, there are needs for separators that not only have excellent heat resistance at an operating temperature of the battery, but also have a function to stop the battery in case of thermal runaway of the battery.

### SUMMARY OF THE INVENTION

The invention is defined by the appended claims. The description that follows is subjected to this limitation. Any disclosure lying outside the scope of said claims is only intended for illustrative as well as comparative purposes.

It is an object of the present invention to provide a separator for a rechargeable lithium battery having excellent heat resistance at a battery operating temperature and an added function of stopping battery operation in case of thermal runaway of the battery.

In an embodiment, a separator for a rechargeable lithium battery includes a substrate and a heat resistant layer on at least one surface of the substrate; wherein the separator further includes a shutdown filler under, inside, or on the heat resistant layer, or two or more thereof.

Another embodiment provides a rechargeable lithium battery including the separator for a rechargeable lithium battery.

The separator for a rechargeable lithium battery according to an embodiment has excellent heat resistance at the operating temperature of the battery and has a function to stop the battery in the event of thermal runaway of the battery, thereby contributing to safe driving of a high-capacity and high-output rechargeable lithium battery.

### BRIEF DESCRIPTION OF THE DRAWINGS

FIG. 1 is a view for explaining a "diameter" of the three-dimensional structured particle 1.
FIG. 2 is a view for explaining a "diameter" and a "length" of the wire-type particle 2.
FIG. 3 is a view schematically showing that only the three-dimensional structured particles 1 are coated on a substrate (not shown).
FIG. 4 is a view schematically showing that the three-dimensional structured particles 1 and the wire-type particles 2 are coated on a substrate (not shown).
FIGS. 5 to 10 are views schematically illustrating separators for a rechargeable lithium battery according to embodiments, respectively.
FIG. 11 is an exploded perspective view of a rechargeable lithium battery according to an embodiment.

### DETAILED DESCRIPTION OF THE EMBODIMENTS

Hereinafter, specific embodiments will be described in detail so that those of ordinary skill in the art can easily implement them.

It should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

"Layer" herein includes not only a shape formed on the whole surface when viewed from a plan view, but also a shape formed on a partial surface.

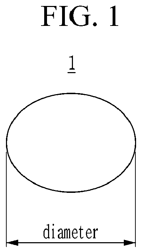

"Diameter" of the "three-dimensional structured particle" means an average particle diameter (D50) of the particles and may be measured by laser diffraction (LD). The method may be performed according to ISO 13320:2020. According to the IUPAC definition, the equivalent diameter of a non-spherical particle is equal to a diameter of a spherical particle that exhibits identical properties to that of the investigated non-spherical particle. For example, the "diameter" of the "three-dimensional structured particle" may represent a length of a straight line passing through the center of the particle and having the longest extension, as shown in FIG. 1. A length of the three-dimensional structured particles may be at most 2 times as large as its diameter.

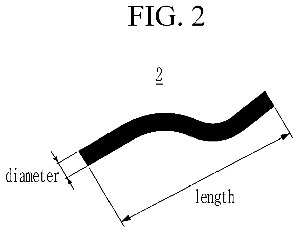

A length of the wire-type particles is at least 5 times as large as its diameter, in particular 10 times as large as its fiber diameter. In other words, the "wire-type particle" is a fiber having a length that is at least 5 times as large as its fiber diameter, in particular 10 times as large as its fiber diameter. A "diameter" of the wire-type particle means an average (fiber) diameter and the "length" means an average (fiber) length. An exemplary wire-type particle (or fiber) is shown in FIG. 2. The average (fiber) length and the average (fiber) diameter of the wire-type particles are each independently, the average length and the average diameter may be measured by scanning electronic microscope (SEM) analysis. "Thickness" may be measured through a thickness measuring device or a photograph taken with an optical microscope such as a scanning electron microscope.

### (Separator for Rechargeable Lithium Battery)

In an embodiment, a separator for a rechargeable lithium battery includes a substrate and a heat resistant layer on at least one surface of the substrate; wherein the heat resistant layer may include heterogeneous particles having different shapes; a shutdown filler is under, inside, or on the heat resistant layer, or two or more thereof.

The separator for a rechargeable lithium battery according to an embodiment has excellent heat resistance at the operating temperature of the battery and has a function to stop the battery in the event of thermal runaway of the battery, thereby contributing safe operation of a high-capacity and high-output rechargeable lithium battery.

For example, the separator for a rechargeable lithium battery of an embodiment includes a heat resistant layer, and the heat resistant layer includes heterogeneous particles having different shapes. For example, the heat resistant layer may include three-dimensional structured particles and wire-type particles as heterogeneous particles having different shapes.

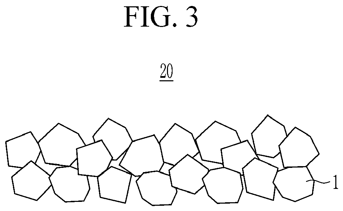

As shown in FIG. 3, when three-dimensional structured particles 1 alone are coated on a substrate (not shown), a plurality of empty spaces are created between the three-dimensional structured particles 1, which lowers packing density of a coating layer and eventually, deteriorates heat resistance of the separator.

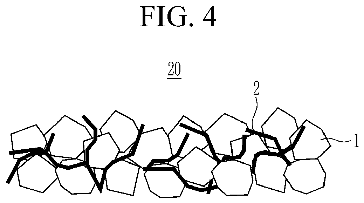

However, as shown in FIG. 4, when the three-dimensional structured particles 1 are coated with wire-type particles 2 on the substrate (not shown), the plurality of empty spaces is filled with the wire-type particles 2, increasing the packing density and the improving the heat resistance of the separator.

If the particles having different shapes are coated on the substrate, the packing density of the coating layer is improved compared to the case where the three-dimensional structured particles alone are coated on the substrate, so that excellent heat resistance can be exhibited even when the separator is formed thinly.

Accordingly, in the above embodiment, a coating layer including heterogeneous particles having different shapes is proposed, and in particular, this coating layer is referred to as a "heat resistant layer" in that it contributes to the heat resistance of the separator.

Meanwhile, the separator for a rechargeable lithium battery of an embodiment includes a shutdown filler in addition to the heat resistant layer.

As driving cycles of the high-capacity and high-output rechargeable lithium battery are repeated, the temperature of the battery increases and extreme situations such as thermal runaway may occur.

Accordingly, in the above embodiment, when thermal runaway of the battery occurs, a filler capable of stopping the driving of the battery is introduced, and in particular, the filler is referred to as a "shutdown filler" due to its function of the filler.

Considering the respective functions of the heat resistant layer and the shutdown filler, the heat resistant layer may be on at least one surface of the substrate, and the shutdown filler may be under, inside, or on the heat resistant layer, or at least two of them.

Hereinafter, the separator for a rechargeable lithium battery of an embodiment will be described in detail.

### [Heat Resistant Layer]

### Heterogeneous Particles of Different Shapes

As described above, the heat resistant layer may include wire-type particles and three-dimensional structured particles as heterogeneous particles having different shapes. Herein, the three-dimensional structured particle may mean a particle having a three-dimensional (3D) shape, and the wire-type particle may mean a particle having a two-dimensional (2D) shape (or having the shape of a fiber).

An average particle diameter (D50) of the three-dimensional structured particles may be 100 nm to 1,000 nm measured by laser diffraction. An average length of the wire-type particles may be 100 nm to 3 µm and an average diameter of the wire-type particles may be 1 nm to 100 nm, wherein the average length and the average diameter measured by scanning electronic microscope (SEM) analysis. A ratio of the average length of the wire-type particles and the average diameter of the three-dimensional structured particles may be 30:1 to 1:10.

A ratio of the length of the wire-type particle and the diameter of the three-dimensional structured particle may be 20:1 to 1:10, or 10:1 to 1:5.

For example, the diameter of the three-dimensional structured particle may be 100 nm to 500 nm, 100 nm to 300 nm, or 200 nm to 300 nm.

Further, the length of the wire-type particle may be 100 nm to 1 µm, 100 nm to 0.5 µm, or 100 nm to 0.3 µm. In addition, the diameter of the wire-type particle may be 10 nm to 50 nm, and 20 nm to 30 nm.

If each of the above ranges is satisfied, the wire-type particles efficiently fill empty spaces between the three-dimensional structured particles, and thus the packing density of the heat resistant layer can be remarkably improved. However, as the length of the wire-type particle is relatively longer compared to the diameter of the three-dimensional structured particle, the coating uniformity may decrease, and as the length of the wire-type particle becomes shorter, the packing density may decrease. Considering this relationship, the ratio of the length of the wire-type particle and the diameter of the three-dimensional structured particle can be adjusted.

On the other hand, a weight ratio of the wire-type particles and the three-dimensional structured particles may be 98:2 to 2:98, 90:10 to 10:90, 75:25 to 25:75, 60:40 to 40:60 or 50:50.

Within these ranges, the wire-type particles efficiently fill empty spaces between the three-dimensional structured particles, so that the packing density of the heat resistant layer can be remarkably improved. However, as the weight of the wire-type particles increases relative to the weight of the three-dimensional structured particles, dispersibility decreases, and as the weight decreases, the heat resistance effect may decrease. Considering this relationship, the weight ratio of the wire-type particles and the three-dimensional structured particles can be adjusted.

### Three-dimensional Structured Particles

The three-dimensional structured particles are particles having a three-dimensional (3D) shape, and may have, for example, a spherical shape, an elliptical shape, or a polyhedron shape

For example, the three-dimensional structured particles may include an organic filler, an inorganic filler, or a combination thereof.

The organic filler maintains its particle shape even after a thermal compression process, thereby contributing to the heat resistance of the separator.

For example, a weight average molecular weight of the organic filler may be 10,000 g/mol to 1,000,000 g/mol. Within the above range, it can contribute to the heat resistance and insulation resistance of the separator. For example, the weight average molecular weight of the organic filler may be 10,000 g/mol or more, 50,000 g/mol or more, or 100,000 g/mol or more, and 1,000,000 g/mol or less, 600,000 g/mol or less, or 350,000 g/mol or less.

For example, the organic filler may include a crosslinked acrylate-based copolymer, a poly(vinylidene fluoride, PVdF)-based copolymer, a styrene-acrylate-based copolymer, an acrylic acid-based copolymer, or a combination thereof. For example, the organic filler may be a crosslinked acrylate-based copolymer, which maintains the particle shape after the thermal compression process and improves the heat resistance of the separator.

The inorganic filler is a material contributing to the heat resistance of the separator, and may include Al₂O₃, boehmite, B₂O₃, Ga₂O₃, TiO₂, SnO₂, CeO₂, MgO, NiO, CaO, GaO, ZnO, ZrO₂, Y₂O₃, SrTiOs, BaTiO₃, Mg(OH)₂, or a combination thereof. For example, the inorganic filler may be Al₂O₃ or boehmite.

### Wire-type Particles

The wire-type particles are particles having a two-dimensional (2D) shape, and have a shape that is advantageous for the wire-type particles to efficiently fill empty spaces between the three-dimensional structured particles. The wire-type particles are fibers.

The wire-type particles may include (fibrillar) boehmite, carbon nanotubes, silver nanowires, boron carbide nanowires, nanocellulose, copper hydroxide nanowires, silicon monoxide nanowires, hydroxyapatite nanowires, or a combination thereof. For example, the wire-type particles may be (fibrillar) boehmite.

### Binder for Heat Resistant Layer

The heat resistant layer may further include a binder for the heat resistant layer to bind particles constituting the heat resistant layer to the substrate.

The binder for the heat resistant layer may include polyvinylidene fluoride (PVdF), carboxylmethyl cellulose (CMC), polyvinylidene fluoride-hexafluoropropylene (PVdF-HFP) copolymer, ethylene vinylacetate (EVA), hydroxyethyl cellulose (HEC), polyvinyl alcohol (PVA), polyvinylbutyral (PVB), an ethylene-acrylic acid copolymer, acrylonitrile, a vinyl acetate derivative, polyethylene glycol, an acrylic rubber, or a combination thereof.

The binder for the heat resistant layer may be of a solution type, which may exhibit excellent heat resistance compared to a particle type binder.

A weight ratio of a total weight of the heterogeneous particles constituting the heat resistant layer and a weight of the adhesive binder for the heat resistant layer may be 10:1 to 50:1. Within the above range, while securing an adhesive strength between the particles constituting the heat resistant layer and an adhesive strength between the particles constituting the heat resistant layer and the substrate, heat resistance by the particles constituting the heat resistant layer and the binder for the heat resistant layer may be sufficiently exhibited.

For example, as the content of the binder within the above range is relatively high, heat resistance may decrease, and as the content of the binder decreases, adhesive strength to the substrate may decrease. Considering such a trade-off relationship, the weight ratio of the heterogeneous particles and the binder constituting the heat resistant layer may be adjusted.

### Thickness of Heat Resistant Layer

The heat resistant layer may have a thickness of less than or equal to 5 µm (however, greater than 0 µm). Since the heat resistant layer includes wire-type particles together with three-dimensionally structured particles as heterogeneous particles having different shapes, it can have sufficient heat resistance even with a thin thickness as described above.

The heat resistant layer may have a thickness of 0.5 µm to 5 µm, 1 µm to 3 µm, or 1 µm to 2 µm. If the thickness of the heat resistant layer is within the above range, heat resistance is improved, suppressing internal short circuit of the battery, securing a stable separator, and suppressing an increase in internal resistance of the battery.

### [Shutdown Filler]

### Type of Shutdown Filler

The shutdown filler may be selected from material having a glass transition temperature (Tg) of 90 °C to 110 °C to stop operation of a battery during the thermal runaway of the battery.

The shutdown filler may have an average diameter (D50) of 0.1 µm to 1 µm, 0.1 µm to 0.5 µm, or 0.1 µm to 0.3 µm measured by laser diffraction.

Such a shutdown filler may include the shutdown filler includes low-density polyethylene (LDPE), linear low-density polyethylene (LLDPE), low Mw high-density polyethylene (Low Mw-HDPE), or a combination thereof.

For example, the shutdown filler may be low-density polyethylene.

### Shutdown Filler Layer

As mentioned above, the shutdown filler may be disposed under, inside, or on the heat resistant layer or at least two thereof. In particular, when the shutdown filler is disposed under and/or inside the heat resistant layer, it may be present as one layer, which is called to be a "shutdown filler layer."

The shutdown filler layer may have a thickness of less than or equal to 3 µm (however, greater than 0 µm). Such a thin thickness may secure a sufficient shutdown function.

For example, the shutdown filler layer has a thickness of 0.5 µm to 3 µm, 0.5 µm to 2 µm, or 1 µm to 2 µm. When the shutdown filler layer has a thickness within the ranges, the shutdown filler layer may stop operation of a battery during the thermal runaway due to the excellent shutdown function.

### [Substrate]

The substrate may include polyolefin, polyester, polytetrafluoroethylene (PTFE), polyacetal, polyamide, polyimide, polycarbonate, polyetheretherketone, polyaryletherketone, polyetherimide, polyamideimide, polybenzimidazole, polyethersulfone, polyphenylene oxide, a cyclic olefin copolymer, polyphenylene sulfide, polyethylene naphthalene, a glass fiber, or a combination thereof, but is not limited thereto.

Examples of the polyolefin include polyethylene and polypropylene, and examples of the polyester include polyethylene terephthalate and polybutylene terephthalate.

In addition, the substrate may be a non-woven fabric or a porous substrate in the form of a woven fabric, and may have a single film or multi-layer structure. For example, the substrate may include a polyethylene single film, a polypropylene single film, a polyethylene/polypropylene double film, a polypropylene/polyethylene/polypropylene triple film, a polyethylene/polypropylene/polyethylene triple film, and the like.

The substrate may have a thickness of 1 to 40 µm, for example, 1 to 30 µm, 1 to 20 µm, 5 to 15 µm, or 5 to 10 µm. If the thickness of the substrate is within the above range, a short circuit between the positive electrode and the negative electrode can be prevented without increasing the internal resistance of the battery.

### [Separator Structure]

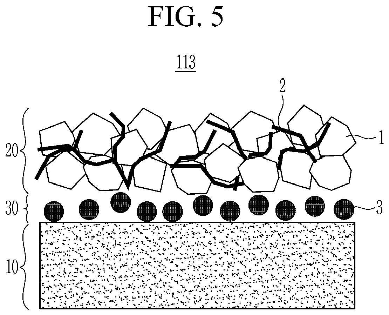

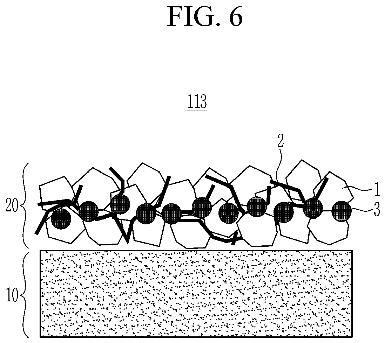

As shown in FIGS. 5 to 10, the separator of one embodiment has a structure in which the heat resistant layer is disposed on at least one surface of the substrate, wherein the shutdown filler is disposed under, inside, or on the heat resistant layer or at least two thereof.

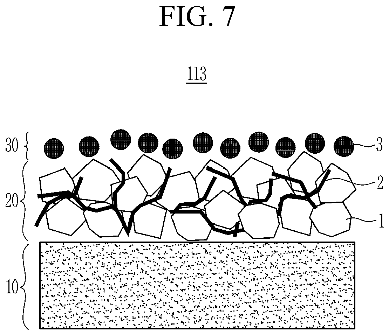

For example, as shown in FIGS. 5 to 7, the first heat resistant layer 20 is on the first surface of the substrate 10; and the first shutdown filler 3 may be under, inside, or on the first heat resistant layer 20 or at least two thereof. In other words, the heat resistant layer 20 may be on one surface of the substrate 10, and the shutdown filler 3 also may be present only on one surface of the substrate 10. In particular, as shown in FIGS. 5 and 7, when the shutdown filler 3 is present under and/or inside the heat resistant layer, it may be present as one layer (shutdown filler layer 30).

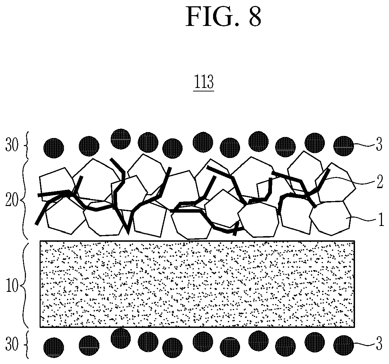

On the other hand, as shown in FIG. 8, on the first surface of the substrate 10, the first heat resistant layer 20 is disposed; the first shutdown filler 3 is present under, inside, or on the first heat resistant layer 20 or at least two thereof; and a second shutdown filler 3 may be present on the second surface of the substrate 10. In other words, the heat resistant layer 20 may be disposed only on one surface of the substrate 10, and the shutdown filler 3 may be present on both surfaces of the substrate 10.

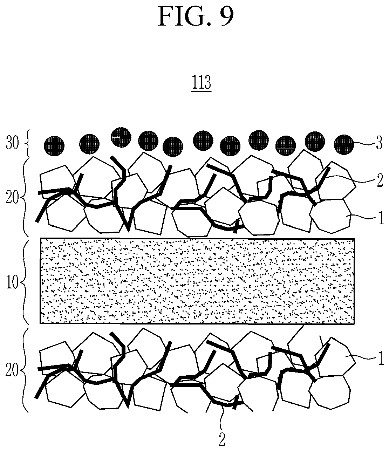

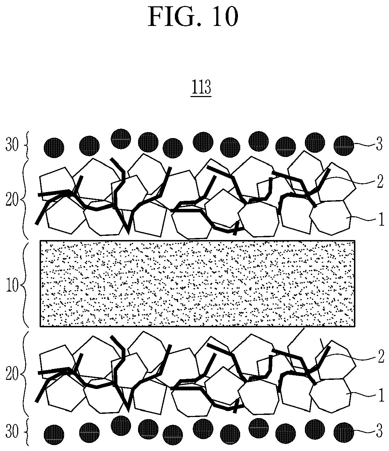

Alternatively, as shown in FIGS. 9 and 10, the first heat resistant layer 20 is disposed on the first surface of the substrate 10; a second heat resistant layer 20 is disposed on the second surface of the substrate 10; the first shutdown filler 3 is present under, inside, or on the first heat resistant layer 20 or at least two thereof; and the second shutdown filler 3 may be present under, inside, or on the second heat resistant layer 20 or at least two thereof. In other words, the heat resistant layer 20 is disposed on both surfaces of the substrate 10, and the shutdown filler 3 also may be present on one surface or both surfaces of the substrate 10. Herein, the case that the shutdown filler is present only one of under, inside, or on the heat resistant layer is illustrated, but the shutdown filler may be present under, inside, or on the heat resistant layer or at least two thereof.

### [Heat Resistance of Separator]

As mentioned above, the separator of an embodiment can exhibit excellent heat resistance even with a thin thickness.

For example, the separator may have an average thermal shrinkage rate of 5% or less, for example, 4% or less, 3% or less, 2% or less, or 1 % or less in a longitudinal direction (MD direction, Machine Direction) and a transverse direction (TD direction) measured after exposure at 150 to 250 °C for 1 hour. Accordingly, the separator of an embodiment can prevent shrinkage of the substrate due to heat and separation between the coating layer and the substrate.

A method of measuring the thermal shrinkage rate of the separator is not particularly limited but may be any commonly-used method in the technical field of the present invention. Non-limiting examples of the method of measuring the thermal shrinkage rate of the separator are as follow: performed by cutting the manufactured separator to have a size of a width (MD) of about 10 cm X a length (TD) of about 10 cm, storing it in a 150°C to 250 °C chamber for 1 hour, and then, measuring shrinkage degrees in a machine direction (MD) and a perpendicular direction (TD) to calculate the thermal shrinkage rate.

### (Rechargeable Lithium Battery)

Another embodiment provides a rechargeable lithium battery including the aforementioned separator for a rechargeable lithium battery of an embodiment.

The aforementioned separator for a rechargeable lithium battery of an embodiment exhibits excellent thermal stability, structural stability, adhesive strength, air permeability, etc., and contributes to the stable operation of a rechargeable lithium battery.

Hereinafter, the rechargeable lithium battery will be described in detail, except for overlapping descriptions with the foregoing.

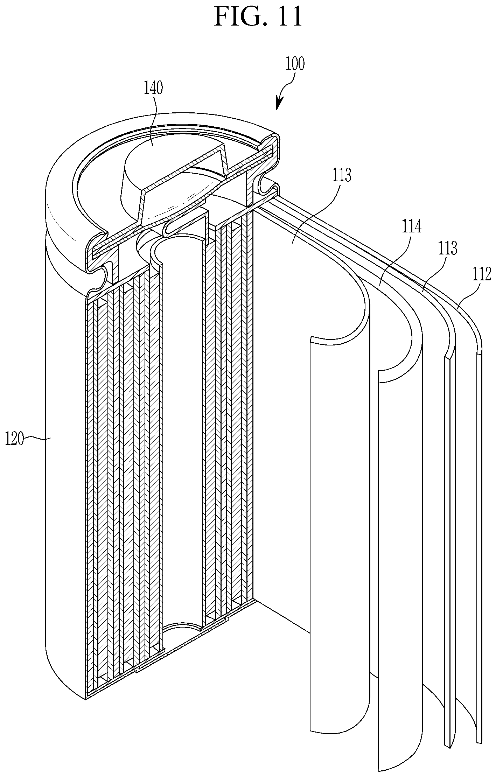

FIG. 11 is an exploded perspective view of a rechargeable lithium battery according to an embodiment. Referring to FIG. 11, a rechargeable lithium battery 100 according to an embodiment includes a battery cell including a negative electrode 112, a positive electrode 114 facing the negative electrode 112, a separator 113 disposed between the negative electrode 112 and the positive electrode 114, and an electrolyte solution (not shown) immersed in the negative electrode 112, positive electrode 114 and separator 113, a battery case 120 housing the battery cell, and a sealing member 140 sealing the battery case 120.

### Positive Electrode

The positive electrode 114 includes a positive electrode current collector and a positive electrode active material layer formed on the positive electrode current collector. The positive electrode active material layer includes a positive electrode active material, a positive electrode binder, and optionally a conductive material.

The positive electrode current collector may use aluminum, nickel, and the like, but is not limited thereto.

The positive electrode active material may use a compound capable of intercalating and deintercalating lithium. For example, at least one of a composite oxide or a composite phosphate of a metal selected from cobalt, manganese, nickel, aluminum, iron, or a combination thereof and lithium may be used. For example, the positive electrode active material may be a lithium cobalt oxide, a lithium nickel oxide, a lithium manganese oxide, a lithium nickel cobalt manganese oxide, a lithium nickel cobalt aluminum oxide, a lithium iron phosphate, or a combination thereof.

The binder improves binding properties of positive electrode active material particles with one another and with a current collector, and specific examples may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto. These may be used alone or as a mixture of two or more.

The conductive material improves conductivity of an electrode and examples thereof may be natural graphite, artificial graphite, carbon black, a carbon fiber, a metal powder, a metal fiber, and the like, but are not limited thereto. These may be used alone or as a mixture of two or more. The metal powder and the metal fiber may use a metal of copper, nickel, aluminum, silver, and the like.

### Negative Electrode

The negative electrode 112 includes a negative electrode current collector and a negative electrode active material layer formed on the negative electrode current collector.

The negative electrode current collector may use copper, gold, nickel, a copper alloy, and the like, but is not limited thereto.

The negative electrode active material layer may include a negative electrode active material, a negative electrode binder, and optionally a conductive material. The negative electrode active material may be a material that reversibly intercalates/deintercalates lithium ions, a lithium metal, a lithium metal alloy, a material capable of doping and dedoping lithium, a transition metal oxide, or a combination thereof.

The material that reversibly intercalates/deintercalates lithium ions may be a carbon material which is any generally-used carbon-based negative electrode active material, and examples thereof may be crystalline carbon, amorphous carbon, or a combination thereof. Examples of the crystalline carbon may be graphite such as irregular, sheet-shape, flake, spherical shape or fiber-shaped natural graphite or artificial graphite. Examples of the amorphous carbon may be soft carbon or hard carbon, a mesophase pitch carbonized product, calcined coke, and the like. The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn. The material capable of doping and dedoping lithium may be Si, SiOₓ (0<x<2), a Si-C composite, a Si-Y alloy, Sn, SnO₂, a Sn-C composite, a Sn-Y alloy, and the like, and at least one of these may be mixed with SiO₂. Specific examples of the element Y may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, and a combination thereof. The transition metal oxide may be vanadium oxide, lithium vanadium oxide, and the like.

The binder and the conductive material used in the negative electrode 112 may be the same as the binder and the conductive material of the aforementioned positive electrode 114.

The positive electrode 114 and the negative electrode 112 may be manufactured by mixing each active material composition including each active material and a binder, and optionally a conductive material in a solvent, and coating the active material composition on each current collector. Herein, the solvent may be N-methylpyrrolidone, and the like, but is not limited thereto. The electrode manufacturing method is well known, and thus is not described in detail in the present specification.

### Electrolyte Solution

The electrolyte solution includes an organic solvent a lithium salt.

The organic solvent serves as a medium for transmitting ions taking part in the electrochemical reaction of a battery. The organic solvent may be a carbonate-based solvent, an ester-based solvent, an ether-based solvent, a ketone-based solvent, an alcohol-based solvent, and an aprotic solvent. The carbonate-based solvent may be dimethyl carbonate, diethyl carbonate, dipropyl carbonate, methylpropyl carbonate, ethylpropyl carbonate, methylethyl carbonate, ethylene carbonate, propylene carbonate, butylene carbonate, and the like, and the ester-based solvent may be methyl acetate, ethyl acetate, n-propyl acetate, 1,1-dimethylethyl acetate, methylpropionate, ethylpropionate, γ-butyrolactone, decanolide, valerolactone, mevalonolactone, caprolactone, and the like. The ether-based solvent may be dibutyl ether, tetraglyme, diglyme, dimethoxyethane, 2-methyltetrahydrofuran, tetrahydrofuran, and the like, and the ketone-based solvent may be cyclohexanone, and the like. The alcohol-based solvent may be ethanol, isopropyl alcohol, and the like, and the aprotic solvent may be nitriles such as R-CN (R is a C2 to C20 linear, branched, or cyclic hydrocarbon group, a double bond, an aromatic ring, or an ether bond), and the like, amides such as dimethyl formamide, dioxolanes such as 1,3-dioxolane, sulfolanes, and the like.

The organic solvent may be used alone or in a mixture of two or more, and if the organic solvent is used in a mixture of two or more, the mixture ratio may be controlled in accordance with a desirable cell performance.

The lithium salt is dissolved in an organic solvent, supplies lithium ions in a battery, basically operates the rechargeable lithium battery, and improves lithium ion transportation between positive and negative electrodes therein. Examples of the lithium salt may include LiPF₆, LiBF₄, LiSbF₆, LiAsF₆, LiN(SO₃C₂F₅)₂, LiN(CF₃SO₂)₂, LiC₄F₉SO₃, LiClO₄, LiAlO₂, LiAlCl₄, LiN(CₓF₂ₓ₊₁SO₂)(C_{y}F_{2y+1}SO₂) (x and y are natural numbers), LiCI, Lil, LiB(C₂O₄)₂, or a combination thereof, but are not limited thereto.

The lithium salt may be used in a concentration ranging from 0.1 M to 2.0 M. If the lithium salt is included within the above concentration range, an electrolyte may have excellent performance and lithium ion mobility due to optimal conductivity and viscosity of the electrolyte solution.

Examples and comparative examples of the present invention are described below. The following examples are only examples of the present invention, but the present invention is not limited to the following examples.

### <Separator Including Heat Resistant Layer Alone>

### Reference Example 1

### (1) Preparation of Composition for Coating Layer

As an organic filler among three-dimensional structured particles, an irregular-shaped and crosslinked acrylate-based copolymer having a weight average molecular weight of 300,000 g/mol and an average diameter (D50) of 200 nm was prepared. In addition, as a wire-type particle, boehmite having an average length (50) of 1 µm and an average diameter (D50) of 30 nm was prepared.

In water as a solvent, the organic filler and the wire-type particle were mixed in a weight ratio of 20:80, preparing a composition for a coating layer according to Reference Example 1.

### (2) Manufacture of Separator

As a substrate, polyethylene with a thickness of 9 µm (Manufacturer: SKIET Co., Ltd.) was prepared.

The composition for a coating layer was coated on one surface of the substrate by using a Doctor blade and dried at room temperature to form a 3 µm-thick coating layer. Accordingly, a separator of Reference Example 1 was obtained.

### Reference Example 2

As an organic filler among three-dimensional structured particles, an irregular-shaped and crosslinked acrylate-based copolymer having a weight average molecular weight of 300,000 g/mol and a diameter of 200 nm was prepared. In addition, as wire-type particles, boehmite having a length of 0.5 µm and a diameter of 30 nm was prepared.

A composition for a coating layer and a separator according to Reference Example 2 were prepared in the same manner as in Reference Example 1 except that the above organic filler and wire-type particles were used.

### Reference Example 3

As an organic filler among three-dimensional structured particles, an irregular-shaped and crosslinked acrylate-based copolymer having a weight average molecular weight of 300,000 g/mol and a diameter of 200 nm was prepared. In addition, as wire-type particles, boehmite having a length of 0.3 µm and a diameter of 30 nm was prepared.

A composition for a coating layer and a separator according to Reference Example 3 were prepared in the same manner as in Reference Example 1 except that the above organic filler and wire-type particles were used.

### Reference Example 4

As an organic filler among three-dimensional structured particles, an irregular-shaped and crosslinked acrylate-based copolymer having a weight average molecular weight of 300,000 g/mol and a diameter of 500 nm was prepared. In addition, as wire-type particles, boehmite having a length of 0.3 µm and a diameter of 30 nm was prepared.

A composition for a coating layer and a separator according to Reference Example 4 were prepared in the same manner as in Reference Example 1 except that the above organic filler and wire-type particles were used.

### Reference Example 5

As an organic filler among three-dimensional structured particles, an irregular-shaped and crosslinked acrylate-based copolymer having a weight average molecular weight of 300,000 g/mol and a diameter of 100 nm was prepared. In addition, as wire-type particles, boehmite having a length of 0.3 µm and a diameter of 30 nm was prepared.

A composition for a coating layer and a separator according to Reference Example 5 were prepared in the same manner as in Reference Example 1 except that the above organic filler and wire-type particles were used.

### Reference Example 6

As an organic filler among three-dimensional structured particles, the same acrylate-based copolymer as in Reference Example 3 was prepared. In addition, as wire-type particles, amorphous alumina (Al₂O₃) with a diameter of 100 nm was prepared as an inorganic filler. In addition, as wire-type particles, the same boehmite as in Reference Example 3 was prepared.

A composition for a coating layer according to Reference Example 6 was prepared by mixing the organic filler, the inorganic filler, and the wire-type particles in a weight ratio of 10:10:80 in water as a solvent.

A separator according to Example 6 were prepared in the same manner as in Reference Example 1 except that the above composition for the coating layer was used.

### Reference Example 7

As an inorganic filler among three-dimensional structured particles, amorphous alumina having a diameter of 300 nm was used. A composition for a coating layer and a separator according to Reference Example 7 were prepared in the same manner as in Reference Example 6 except that the above inorganic filler was used.

### Reference Example 8

As an inorganic filler among three-dimensional structured particles, amorphous alumina having a diameter of 600 nm was used. A composition for a coating layer and a separator according to Reference Example 8 were prepared in the same manner as in Reference Example 6 except that the above inorganic filler was used.

### Reference Example 9

As an inorganic filler among three-dimensional structured particles, amorphous alumina having a diameter of 800 nm was used. A composition for a coating layer and a separator according to Reference Example 9 were prepared in the same manner as in Reference Example 6 except that the above inorganic filler was used.

### Reference Example 10

As an inorganic filler among three-dimensional structured particles, amorphous alumina having a diameter of 1,000 nm was used. A composition for a coating layer and a separator according to Reference Example 10 were prepared in the same manner as in Reference Example 6 except that the above inorganic filler was used.

A composition for a coating layer and a separator according to Comparative Reference Example 1 were prepared in the same manner as in Reference Example 3 except that no wire-type particles were used.

### Comparative Reference Example 2

A composition for a coating layer and a separator according to Comparative Reference Example 2 were prepared in the same manner as in Reference Example 3 except that no organic filler was used.

### Comparative Reference Example 3

A styrene butadiene rubber (SBR) having a weight average molecular weight of 200,000 g/mol as a solution-type organic adhesive was used without using a three-dimensional structured organic filler

On the other hand, as wire-type particles among three-dimensional structured particles, the same boehmite in Reference Example 3 was prepared.

A composition for a coating layer and a separator according to Comparative Reference Example 3 were prepared in the same manner as in Reference Example 3 except that the above styrene butadiene rubber (SBR) and wire-type particles were used.

### Comparative Reference Example 4

A composition for a coating layer and a separator according to Comparative Reference Example 4 were prepared in the same manner as in Reference Example 8 except that no wire-type particles were used.

### Comparative Reference Example 5

A styrene butadiene rubber (SBR) having a weight average molecular weight of 200,000 g/mol as an organic adhesive instead of the organic filler was prepared, but no wire-type particles were used.

A composition for a coating layer and a separator according to Comparative Reference Example 5 were prepared in the same manner as in Reference Example 8 except that the above styrene butadiene rubber (SBR) was used and no wire-type particles were used.

For reference, the wire-type particles and the three-dimensional structured particles according to Reference Examples 1 to 10 and Comparative Reference Examples 1 to 5 are summarized in Table 1.

**(Table 1)**

| | Wire-type particle | | Three-dimensional structured particle | | | |
|---|---|---|---|---|---|---|
| | | | Organic filler | | Inorganic filler | |
| | length (nm) | weight (parts by weight) | diameter (nm) | weight (parts by weight) | diamet er (nm) | weight (parts by weight) |
| Ref. Ex. 1 | 1,000 | 80 | 200 | 20 | (unused) | |
| Ref. Ex. 2 | 500 | | 200 | | | |
| Ref. Ex. 3 | 300 | | 200 | | | |
| Ref. Ex. 4 | 300 | | 500 | | | |
| Ref. Ex. 5 | 300 | | 100 | | | |
| Comp. Ref. Ex. 1 | (unused) | | 200 | 100 | | |
| Comp. Ref. Ex. 2 | 300 | 100 | (unused) | | | |
| Comp. Ref. Ex. 3 | 300 | 100 | (organic adhesive was used) | | | |
| Ref. Ex. 6 | 300 | 80 | 200 | 10 | 100 | 10 |
| Ref. Ex. 7 | 300 | | 200 | | 300 | |
| Ref. Ex. 8 | 300 | | 200 | | 600 | |
| Ref. Ex. 9 | 300 | | 200 | | 800 | |
| Ref. Ex. 10 | 300 | | 200 | | 1,000 | |
| Comp. Ref. Ex. 4 | (unused) | | 200 | | 600 | 90 |
| Comp. Ref. Ex. 5 | | | (organic adhesive was used) | | 600 | 100 |

### Evaluation Example 1: Evaluation of Separator

The separators according to Reference Examples 1 to 10 and Comparative Reference Examples 1 to 5 were evaluated under the following conditions.

### (1) Adhesive Strength

After attaching a tape with a width of 12 mm and a length of 150 mm onto the coating layer of each of the separators, the separator was uniformly pressed with a hand roller. The separator was cut into a size extended by 2.0 mm each based on the length and width of the tape, preparing a sample.

After separating the tape-adhered side 10 mm to 20 mm apart from the substrate and then, fixing the substrate with no tape into an upper grip and the tape-adhered side into a lower grip with a gap of 20 mm between the upper and lower grips, the tape-adhered side was peeled off by pulling in a 180 ° direction by using UTM (Instron Corp.). Herein, the peeling was performed at 20 mm/min, and a force required for 40 mm peeling was three times measured and averaged. The measurement results are shown in Table 2.

### (2) Thermal Shrinkage Rate

Each separator of Reference Examples 1 to 10 and Comparative Reference Examples 1 to 5 was cut into a size of a width (MD) of about 10 cm × a length (TD) of about 10 cm, stored in a 200 °C chamber for 10 minutes, and then, measured with respect to shrinkage rates of the separator in the MD direction and the TD direction, and the results are shown in Table 2.

**(Table 2)**

| | Adhesive strength (gf) | Thermal shrinkage rate @ 200 °C, 1hr (%) | |
|---|---|---|---|
| | | MD | TD |
| Reference Example 1 | 13 | 2 | 3 |
| Reference Example 2 | 12 | 2 | 2 |
| Reference Example 3 | 14 | 1 | 1 |
| Reference Example 4 | 13 | 3 | 3 |
| Reference Example 5 | 12 | 2 | 3 |
| Comparative Reference Example 1 | 12 | 32 | 35 |
| Comparative Reference Example 2 | 13 | 18 | 23 |
| Comparative Reference Example 3 | 13 | 25 | 27 |
| Reference Example 6 | 12 | 2 | 3 |
| Reference Example 7 | 13 | 2 | 3 |
| Reference Example 8 | 13 | 3 | 4 |
| Reference Example 9 | 13 | 4 | 3 |
| Reference Example 10 | 12 | 4 | 4 |
| Comparative Reference Example 4 | 12 | 7 | 8 |
| Comparative Reference Example 5 | 13 | 8 | 10 |

Referring to Table 1, the separators of Reference Examples 1 to 10 secured an appropriate adhesive strength as well as exhibited excellent heat resistance, compared with Comparative Reference Examples 1 to 5. For example, in the separators of Reference Examples 1 to 5, one side of a substrate was coated by mixing an organic filler as three-dimensional structured particles and wire-type particles.

Based on that of Reference Example 3 among them, each separator of Comparative Reference Examples 1 to 3 was prepared by excluding the wire-type particles or replacing the organic filler with an organic adhesive. These separators of Comparative Reference Examples 1 to 3, based on the separator of Reference Example 3, exhibited a significantly increased thermal shrinkage rate and a partially deteriorated adhesive strength between the substrate and coating layer.

In addition, in the separators of Reference Examples 6 to 10, one side of a substrate was coated by mixing an organic filler and an inorganic filler as three-dimensional structured particles with wire-type particles.

Based on that of Reference Example 8 among them, each separator of Comparative Reference Examples 4 and 5 was prepared by excluding the wire-type particles or replacing the organic filler with an organic adhesive without using the wire-type particles. These separators of Comparative Reference Examples 4 and 5, based on the separator of Reference Example 8, exhibited a significantly increased thermal shrinkage rate and a partially deteriorated adhesive strength between the substrate and coating layer.

On the other hand, the separators of Reference Examples 1 to 5 exhibited equivalent thermal shrinkage rate and adhesive strength to those of Reference Examples 6 to 10. Accordingly, as long as one surface of a substrate was coated by mixing the three-dimensional structured particles and wire-type particles, excellent heat resistance was not only achieved, but also an appropriate adhesive strength was secured. Here, organic fillers, inorganic fillers, or a combination thereof as the three-dimensional structured particles can be used to exhibit excellent heat resistance.

Herein, Reference examples of coating one surface of a substrate alone were provided, but when both surfaces of the substrate are coated, the effect of enhancing the heat resistance of a separator is inferred to be further improved.

### < Separator Including Heat Resistant Layer and Shutdown Filler >

### Preparation Example 1: Preparation of Composition for Heat Resistant layer

### Including Shutdown Filler

As an organic filler among three-dimensional structured particles, an irregular-shaped and crosslinked acrylate-based copolymer (PMMA) having a weight average molecular weight of 300,000 g/mol and an average diameter (D50) of 200 nm was prepared. In addition, as wire-type particles, boehmite having an average length of 0.3 µm and an average diameter of 30 nm, wherein the average length and the average diameter was prepared. Further, as a shutdown filler, irregular-shaped low-density polyethylene having an average diameter (D50) of 500 nm was prepared.

In water as a solvent, the organic filler, the wire-type particles, and the shutdown filler were mixed in a weight ratio of 20:60:20 to prepare A composition for a heat resistant layer including the shutdown filler of Preparation Example 1.

### Preparation Example 2: Preparation of Composition for Heat Resistant Layer

A composition for a heat resistant layer was prepared by using the same organic filler and wire-type particles as in Preparation Example 1 without using the shutdown filler.

For example, the organic filler and the wire-type particles in a weight ratio of 20:80 were mixed in water as a solvent, preparing the composition for a heat resistant layer of Preparation Example 2. This is substantially the same as the composition for a coating layer of Reference Example 3.

### Preparation Example 3: Preparation of Composition for Heat Resistant Layer

A composition for a heat resistant layer was prepared by using the same organic filler as in Preparation Example without using the shutdown filler.

For example, the organic filler was dispersed in water as a solvent, preparing the composition for a heat resistant layer of Preparation Example 2. This is substantially the same as the composition for a coating layer of Comparative Reference Example 1.

### Preparation Example 4: Preparation of Composition for Shutdown Filler Layer

A composition for a shutdown filler layer was prepared by using the same shutdown filler as in Preparation Example 1.

For example, 100 parts by weight of the shutdown filler and 30 parts by weight of a styrene butadiene rubber (SBR) as a binder were mixed in water as a solvent, preparing the composition for a shutdown filler layer. The above part by weight was based on 100 parts by weight of a total amount of solids included in the composition for a heat resistant layer of Preparation Example 1. This will be equally applied hereinafter.

### Preparation Example 5: Preparation of Composition for Shutdown Filler Layer

A composition for shutdown filler layer was prepared in the same manner as in Preparation Example 4 except that the content of the shutdown filler was changed into 130 parts by weight.

### Preparation Example 6: Preparation of Composition for Shutdown Filler Layer

A composition for shutdown filler layer was prepared in the same manner as in Preparation Example 4 except that the content of the shutdown filler was changed into 160 parts by weight.

### Preparation Example 7: Preparation of Composition for Shutdown Filler Layer

A composition for shutdown filler layer was prepared in the same manner as in Preparation Example 4 except that the content of the shutdown filler was changed into 200 parts by weight.

### Preparation Example 8: Preparation of Composition for Shutdown Filler Layer

A composition for shutdown filler layer was prepared in the same manner as in Preparation Example 4 except that the content of the shutdown filler was changed into 500 parts by weight.

### Example 1: Preparation of separator having [(substrate)/(heat resistant layer including shutdown filler)] structure and rechargeable lithium battery including the same

### (1) Manufacture of Separator

As a substrate, polyethylene with a thickness of 9 µm (Manufacturer: SKIET Co., Ltd.) was prepared.

The composition of Preparation Example 1 was coated on one surface of the substrate by using a Doctor blade and dried at room temperature, forming a heat resistant layer including the shutdown filler (thickness after drying: 3 µm).

Accordingly, a separator with a structure of [(substrate)/(heat resistant layer including shutdown filler)] was obtained.

### (2) Manufacture of Rechargeable Lithium Battery Cell

LiCoO₂ as a positive electrode active material, polyvinylidene fluoride as a binder (tradename: KF1100), and denkablack as a conductive material were mixed in a weight ratio of 92.5:3.5:4, and this mixture was added to an N-Methyl-2-pyrrolidone solvent to a solid content of about 30 wt%, preparing positive electrode mixture slurry.

The positive electrode mixture slurry was coated on an aluminum foil (Al foil, thickness: 15 µm) as a positive electrode current collector by using a Doctor blade and roll-pressed, manufacturing a positive electrode. The positive electrode had a loading amount of about 14.6 mg/cm² and rolling density of about 3.1 g/cm³.

The positive electrode was wound into a circular shape with a diameter of 12 mm and then, used with a lithium metal as a counter electrode and the separator of Example 1, manufacturing a 2032-type rechargeable lithium battery cell (coin half-cell). Herein, an electrolyte solution was prepared by mixing ethylenecarbonate, diethylenecarbonate, and fluoroethylenecarbonate in a weight ratio of 2:6:2 and dissolving 1.3 M LiPF₆ in the mixed solvent.

### Example 2: Preparation of separator having [substrate/heat resistant layer/shutdown filler layer] structure and rechargeable lithium battery including the same

### (1) Manufacture of Separator

The composition of Preparation Example 2 was coated on one surface of the same substrate as in Example 1 by using the Doctor blade and dried at room temperature, forming a heat resistant layer (thickness for drying: 3 µm).

On the heat resistant layer, the composition of Preparation Example 4 was coated by using the Doctor blade and dried at room temperature, forming a shutdown filler layer (thickness after drying: 0.5 µm).

Accordingly, a separator with a structure of [substrate/heat resistant layer/shutdown filler layer] was obtained.

### (2) Manufacture of Rechargeable Lithium Battery Cell

A rechargeable lithium battery cell was manufactured in the same manner as in Example 1 except that the separator of Example 2 was used.

### Example 3: Preparation of separator having [heat resistant layer/substrate/heat resistant layer/shutdown filler layer] structure and rechargeable lithium battery including the same

### (1) Manufacture of Separator

The composition of Preparation Example 2 was coated on both surfaces (first and second surfaces) of the same substrate as in Example 1 by using the Doctor blade and dried at room temperature, forming a heat resistant layer (thickness after drying: at one side:

### 1.5 µm at one side, a total at both sides: 3 µm).

On the heat resistant layer formed on one surface (first surface) of the substrate, the composition of Preparation Example 4 was coated by using the Doctor blade and dried at room temperature, forming a shutdown filler layer (thickness after drying: 0.5 µm).

Accordingly, a separator with a structure of [heat resistant layer/substrate/heat resistant layer/shutdown filler layer] was obtained.

### (2) Manufacture of Rechargeable Lithium Battery Cell

A rechargeable lithium battery cell was manufactured in the same manner as in Example 1 except that the separator of Example 3 was used.

### Example 4: Preparation of separator having [shutdown filler layer/substrate/heat resistant layer/shutdown filler layer] structure and rechargeable lithium battery including the same

### (1) Manufacture of Separator

On one surface (first surface) of the same substrate as in Example 1, the composition of Preparation Example 4 was coated by using the Doctor blade and dried at room temperature, forming a shutdown filler layer (thickness after drying: 0.5 µm).

On the other surface (second surface) of the substrate, the composition of Preparation Example 2 was coated by using the Doctor blade and dried at room temperature, forming a heat resistant layer (thickness after drying: 3 µm).

On the heat resistant layer, the composition of Preparation Example 4 was once coated again by using the Doctor blade and dried at room temperature, forming a shutdown filler layer (thickness after drying: 0.5 µm).

Accordingly, a separator with a structure of [shutdown filler layer/substrate/heat resistant layer/shutdown filler layer] was obtained.

### (2) Manufacture of Rechargeable Lithium Battery Cell

A rechargeable lithium battery cell was manufactured in the same manner as in Example 1 except that the separator of Example 4 was used.

### Example 5: Preparation of separator having [shutdown filler layer/substrate/heat resistant layer/shutdown filler layer] structure and rechargeable lithium battery including the same

A separator and a rechargeable lithium battery cell according to Example 5 were manufactured in the same manner as in Example 2 except that the composition of Preparation Example 5 was used instead of the composition of Preparation Example 4.

### Example 6: Preparation of separator having [shutdown filler layer/substrate/heat resistant layer/shutdown filler layer] and rechargeable lithium battery including the same

A separator and a rechargeable lithium battery cell according to Example 6 were manufactured in the same manner as in Example 2 except that the composition of Preparation Example 6 was used instead of the composition of Preparation Example 4.

### Example 7: Preparation of separator having [shutdown filler layer/substrate/heat resistant layer/shutdown filler layer] structure and rechargeable lithium battery including the same

A separator and a rechargeable lithium battery cell according to Example 7 were manufactured in the same manner as in Example 2 except that the composition of Preparation Example 7 was used instead of the composition of Preparation Example 4.

### Example 8: Preparation of separator having [shutdown filler layer/substrate/heat resistant layer/shutdown filler layer] structure and rechargeable lithium battery including the same

A separator and a rechargeable lithium battery cell according to Example 8 were manufactured in the same manner as in Example 2 except that the composition of Preparation Example 8 was used instead of the composition of Preparation Example 4.

### Comparative Example 1: Preparation of separator having [substrate/heat resistant layer] structure and rechargeable lithium battery including the same

A heat resistant layer was formed on a substrate in the same manner as in Example 2, which was obtained as a separator of Comparative Example 1. In addition, a rechargeable lithium battery cell was manufactured in the same manner as in Example 2 except that the separator of Comparative Example 1 was used.

### Comparative Example 2: Preparation of separator having [substrate/shutdown filler layer] structure and a rechargeable lithium battery including the same

A shutdown filler layer was formed on a substrate in the same manner as in Example 3, which was obtained as a separator of Comparative Example 2. In addition, a rechargeable lithium battery cell was manufactured in the same manner as in Example 3 except that the separator of Comparative Example 2 was used.

### Comparative Example 3: Preparation of separator having [substrate/heat resistant layer (except three-dimensional structured particles)/shutdown filler layer] structure and rechargeable lithium battery including the same

A separator and a rechargeable lithium battery cell according to Comparative Example 3 were manufactured in the same manner as in Example 2 except that the composition of Preparation Example 3 was used instead of the composition of Preparation Example 2.

For reference, separator structures and components of each layer of Examples 1 to 8 and Comparative Examples 1 to 3 are shown in Table 3.

**(Table 3)**

| | Separator structure | Heat resistant layer component | Shutdown filler layer component |
|---|---|---|---|
| Example 1 | substrate/heat resistant layer including shutdown filler | organic filler (three-dimensional structure), wire-type particles, shutdown filler | - |
| Example 2 | substrate/heat resistant layer/shutdown filler layer | organic filler (three-dimensional structure), wire-type particles | shutdown filler |
| Example 3 | heat resistant layer/substrate/heat resistant layer/shutdown filler layer | organic filler (three-dimensional structure), wire-type particles | shutdown filler |
| Examples 4 to 8 | shutdown filler layer/substrate/heat resistant layer/shutdown filler layer | organic filler (three-dimensional structure), wire-type particles | shutdown filler |
| Comparative Example 1 | substrate/heat resistant layer | organic filler (three-dimensional structure), wire-type particles | - |
| Comparative Example 2 | substrate/shutdown filler layer | - | shutdown filler |
| Comparative Example 3 | substrate/heat resistant layer/shutdown filler layer | organic filler (three-dimensional structure) | shutdown filler |

### Evaluation Example 3: Evaluation of Separator

The separators of Examples 1 to 8 and Comparative Examples 1 to 3 were evaluated under the same conditions as in Evaluation Example 1, and the results are shown in Table 4.

**(Table 4)**

| | Adhesive strength @ width 12 mm (gf) | Thermal shrinkage rate @ 200°C, 1hr (%) |
|---|---|---|
| Example 1 | 13 | 3 |
| Example 2 | 13 | 2 |
| Example 3 | 13 | 2 |
| Example 4 | 13 | 2 |
| Example 5 | 13 | 2 |
| Example 6 | 13 | 2 |
| Example 7 | 13 | 2 |
| Example 8 | 13 | 2 |
| Comparative Example 1 | 14 | 3 |
| Comparative Example 2 | 9 | 35 |
| Comparative Example 3 | 12 | 18 |

Referring to Table 4, the separators of Examples 1 to 8 exhibited excellent heat resistance and secured appropriate adhesive strength, compared with the separators of Comparative Examples 1 to 3. For example, the separator of Example 1 was manufactured by forming a heat resistant layer on one surface (first surface) of a substrate, wherein the heat resistant layer particularly included an organic filler (three-dimensional structured particle), wire-type particles, and a shutdown filler. Based on the separator of Example 1, the shutdown filler was excluded from the separator of Comparative Example 1, and the organic filler (three-dimensional structured particle) and the wire-type particles were excluded from the separator of Comparative Example 2. Compared with the separator of Comparative Example 2, the separators of Comparative Example 1 and Example 1 exhibited improved heat resistance and adhesive strength.

On the other hand, the separator of Example 2 was manufactured by sequentially forming a heat resistant layer and a shutdown filler layer on one surface (first surface) of a substrate, and the separator of Example 3 was manufactured by forming a heat resistant layer on the other surface (second surface) of a substrate, while sequentially forming the heat resistant layer and a shutdown filler layer on one surface (first surface) of the substrate. On the other hand, the separators of Examples 4 to 8 were manufactured by sequentially forming the heat resistant layer and a shutdown filler layer on one surface (first surface) of a substrate and also, forming a shutdown filler layer on the other surface (second surface) of the substrate. These separators, in which a heat resistant layer including an organic filler (three-dimensional structured particles) and wire-type particles was separately formed from a shutdown filler layer, exhibited somewhat improved heat resistance, compared with the separator of Example 1. Herein, the shutdown filler may be disposed anywhere under, inside, and on the heat resistant layer.

### Evaluation Example 4: Evaluation of Rechargeable Lithium Battery Cells

The rechargeable lithium battery cells of Examples 1 to 8 and Comparative Examples 1 to 3 were charged and discharged under the same conditions as in Evaluation Example 2, and the results are shown in Table 5.

Independently, the cells were evaluated with respect to a shutdown temperature by creating an exothermic situation, and the results are shown in Table 6. For example, after heating the rechargeable lithium battery cells to 180 °C at 10 °C/min in an oven, the shutdown temperature was obtained by averaging a temperature at an inflection point where internal resistance of the rechargeable lithium battery cells significantly increased.

**(Table 5)**

| | Initial formation efficiency (%) | Cycle-life (capacity retention after 200 cycles, %) | Shutdown temperature (°C) |
|---|---|---|---|
| Example 1 | 88.3 | 95.0 | 131 |
| Example 2 | 88.4 | 95.1 | 130 |
| Example 3 | 88.4 | 95.1 | 128 |
| Example 4 | 88.1 | 94.8 | 125 |
| Example 5 | 87.9 | 94.6 | 123 |
| Example 6 | 87.6 | 94.3 | 120 |
| Example 7 | 87.3 | 94.0 | 115 |
| Example 8 | 87.0 | 93.7 | 110 |
| Comparative Example 1 | 88.8 | 95.3 | 140 |
| Comparative Example 2 | 85.0 | 91.0 | 133 |
| Comparative Example 3 | 86.5 | 92.5 | 130 |

Referring to Table 5, the rechargeable lithium battery cells of Examples 1 to 8 exhibited a longer life-span than those of Comparative Examples 1 to 3 but still secured appropriate initial formation efficiency. Furthermore, the rechargeable lithium battery cells of Examples 1 to 8 had an effect of lowering a shutdown temperature by introducing a shutdown filler into a separator and controlling its position and amount, etc. In particular, considering the results of Tables 4 and 5, the rechargeable lithium battery cells of Examples 1 to 8 additionally had a function of stopping operation of the battery cells during the thermal runaway as well as exhibited excellent heat resistance at the battery operating temperature, compared with the rechargeable lithium battery cells of Comparative Examples 1 to 3, contributing to safe operation of high-capacity and high-output rechargeable lithium batteries.

## Claims

1. A separator (113) for a rechargeable lithium battery (100), comprising
a substrate (10) and a heat resistant layer (20) on at least one surface of the substrate (10);
the separator (113) further includes a shutdown filler (3) under, inside, or on the heat resistant layer (20), or two or more thereof.

2. The separator for a rechargeable lithium battery of claim 1, wherein
the heat resistant layer (20) includes three-dimensional structured particles (1) and wire-type particles (2), wherein
an average particle diameter (D50) of the three-dimensional structured particles (1) is 100 nm to 1,000 nm measured by laser diffraction,
an average length of the wire-type particles (2) is 100 nm to 3 µm and an average diameter of the wire-type particles (2) is 1 nm to 100 nm, wherein the average length and the average diameter of the wire-type particles are each independently, the average length and the average diameter measured by scanning electronic microscope (SEM) analysis, and the average length of the wire-type particles (2) is at least 5 times as large as its average diameter.

3. The separator for a rechargeable lithium battery of claim 2, wherein
a ratio of the average length of the wire-type particles (2) and the average diameter of the three-dimensional structured particles (1) is 30:1 to 1:10; and/or
a weight ratio of the wire-type particles (2) and the three-dimensional structured particles (1) is 98:2 to 2:98.

4. The separator for a rechargeable lithium battery of claim 2, wherein
the three-dimensional structured particles (1) have a spherical shape, an elliptical shape, or a polyhedron shape.

5. The separator for a rechargeable lithium battery of claim 2, wherein
the three-dimensional structured particles (1) include an organic filler, an inorganic filler, or a combination thereof.

6. The separator for a rechargeable lithium battery of claim 5, wherein
the organic filler includes a crosslinked acrylate-based copolymer, a poly(vinylidene fluoride, PVdF)-based copolymer, a styrene-acrylate-based copolymer, an acrylic acid-based copolymer, or a combination thereof.

7. The separator for a rechargeable lithium battery of claim 5, wherein
the inorganic filler includes Al₂O₃, boehmite, B₂O₃, Ga₂O₃, TiO₂, SnO₂, CeO₂, MgO, NiO, CaO, GaO, ZnO, ZrO₂, Y₂O₃, SrTiO₃, BaTiO₃, Mg(OH)₂, or a combination thereof.

8. The separator for a rechargeable lithium battery of claim 5, wherein
the three-dimensional structured particles (1) include the inorganic filler and the organic filler in a weight ratio of 98:2 to 2 :98.

9. The separator for a rechargeable lithium battery of claim 2, wherein
the wire-type particles (2) include fibrillar boehmite, carbon nanotubes, silver nanowires, boron carbide nanowires, nanocellulose, copper hydroxide nanowires, silicon monoxide nanowires, hydroxyapatite nanowires, or a combination thereof.

10. The separator for a rechargeable lithium battery of any one of the preceding claims, wherein
a weight ratio of the heat resistant layer (20) and the shutdown filler (3) is 90:10 to 10:90.

11. The separator for a rechargeable lithium battery of any one of the preceding claims, wherein
a glass transition temperature (Tg) of the shutdown filler (3) is 90 °C to 110 °C.

12. The separator for a rechargeable lithium battery of any one of the preceding claims, wherein
an average diameter (D50) of the shutdown filler (3) is 0.1 µm to 1 µm measured by laser diffraction.

13. The separator for a rechargeable lithium battery of any one of the preceding claims, wherein
the shutdown filler (3) includes low-density polyethylene (LDPE), linear low-density polyethylene (LLDPE), low Mw high-density polyethylene (Low Mw-HDPE), or a combination thereof.

14. The separator for a rechargeable lithium battery of any one of the preceding claims, wherein
the substrate (10) includes polyolefin, polyester, polytetrafluoroethylene (PTFE), polyacetal, polyamide, polyimide, polycarbonate, polyetheretherketone, polyaryletherketone, polyetherimide, polyamideimide, polybenzimidazole, polyethersulfone, polyphenylene oxide, a cyclic olefin copolymer, polyphenylene sulfide, polyethylene naphthalene, a glass fiber, or a combination thereof.

15. A rechargeable lithium battery (100), comprising
a positive electrode (114);
a negative electrode (112); and
the separator (113) of any one of the preceding claims between the positive electrode (114) and the negative electrode (112).
